# EUROPEAN PATENT SPECIFICATION

(11) **EP 1 024 063 B1**
(45) Date of publication and mention of the grant of the patent: **10.09.2003**
(21) Application number: 00300545.1
(22) Date of filing: 26.01.2000
(51) Int. Cl.: B60R 21/34

(54) **Vehicle bumper and hood airbag system**
Kraftfahrzeug- Stossfänger und Hauben- Airbagsystem
Capot et pare-chocs de véhicule avec système de coussin gonflable

(30) Priority: 29.01.1999 JP 2173499
(43) Date of publication of application: 02.08.2000
(73) Proprietor: NISSAN MOTOR CO., LTD., Yokohama-shi Kanagawa-ken (JP)
(72) Inventor: Toshiyuki, Asai, Zushi-shi, Kanagawa-ken (JP); Tetsuo, Maki, Yokosuka-shi, Kanagawa-ken (JP)
(74) Representative: Godwin, Edgar James

(56) References cited:
- EP-A- 0 816 178
- DE-A- 2 330 745
- GB-A- 2 311 966
- US-A- 5 033 569
- US-A- 5 618 595
- PATENT ABSTRACTS OF JAPAN vol. 018, no. 453 (M-1662), 24 August 1994 (1994-08-24) -& JP 06 144154 A (MITSUBISHI ELECTRIC CORP), 24 May 1994 (1994-05-24)

## Description

The present invention relates to an airbag system mounted to the front end of a vehicle.

Related apparatuses are disclosed in the Japanese Unexamined Laid-Open Patent Application publications H6-144154 and H7-125605.

A shock-absorbing apparatus for a pedestrian is shown in the Japanese Unexamined Laid-Open Patent Application publication H6-144154, which expresses an airbag expands straight forward from a bumper. This type of apparatus needs large capacity of the airbag for covering all forward ranges, and requires long time for expansion. Additionally, the bumper size increases to store the large-capacity airbag, the bumper has less design freedom.

With the hood airbag apparatus of the Japanese Unexamined Laid-Open Patent Application publication H7-125605, the airbag expands over a large upper surface of the hood. For this reason, the capacity of the airbag becomes large, and the time required for expansion becomes long. It is additionally necessary install the large-capacity airbag in the small space between the hood and the engine unit, thereby imposing a severe restriction on the design of the front part of the vehicle.

GB-A-2311 966 describes an airbag system mounted on a vehicle body with a bumper attached to the front end of the body, an airbag disposed behind the bumper, a sensor for pre-detecting a vehicle front collision and generating a collision signal, and an inflator which receives the collision signal and generates and supplies gas for expanding the airbag. The lower part of the bumper is displaceable to permit forward expansion of the airbag.

DE 23 30 745 A describes providing the front side of an airbag with a hard border so that collision with a small object (a tree) causes not only local compression but almost uniform total compression of the expanded external airbag.

Accordingly, it is an object of the present invention to provide an airbag system for pedestrian protection which provides protection for a pedestrian, taking into consideration actual behaviour when a collision occurs, and which also enables the capacity of the airbag to be made small.

The present invention provides an airbag system as set forth in claim 1.

### BRIEF DESCRIPTION OF THE DRAWINGS

Fig.1 is a side view of the front part of a vehicle, showing the condition in which a pedestrian is protected by an airbag system according to the first embodiment;
Fig. 2 is a detailed cross-section view of the front part of the vehicle;
Fig. 3 is a cross-section view of the expanded condition of the airbag;
Fig. 4A is a schematic representation of the condition in which a colliding object is in contact with an airbag not having a high-rigidity part;
Fig. 4B is a schematic representation of the condition in which a colliding object is in contact with an airbag having a high-rigidity part;
Fig. 5 is a graph showing the start of repelling force with different effective surface areas;
Fig. 6 is a cross-section view showing an airbag according to the second embodiment;
Fig. 7 is a cross-section view showing an airbag according to the third embodiment;
Fig. 8 is a cross-section view showing an airbag according to the fourth embodiment;
Fig. 9 is a cross-section view showing an airbag according to the fifth embodiment;
Fig. 10 is a perspective view showing an airbag according to the fifth embodiment;
Fig. 11 is a cross-section view showing the condition of an airbag according to the sixth embodiment, before expansion;
Fig. 12 is a cross-section view showing the condition of an airbag according to the sixth embodiment, after expansion;
Fig. 13 is a cross-section view showing an airbag according to the seventh embodiment;
Fig. 14 is a cross-section view showing an airbag according to the eighth embodiment;
Fig. 15 is a cross-section view showing the condition of an airbag according to the ninth embodiment before expansion;
Fig. 16 is a cross-section view showing the condition of an airbag according to the ninth embodiment after expansion;
Figs. 17 to 21 show cross-sections of airbags that are not part of the invention.

### DESCRIPTION OF THE PREFERRED EMBODIMENTS

Preferred embodiments of an airbag system for reducing an impact for a pedestrian according to the present invention are described below in detail, with reference being made to relevant accompanying drawings.

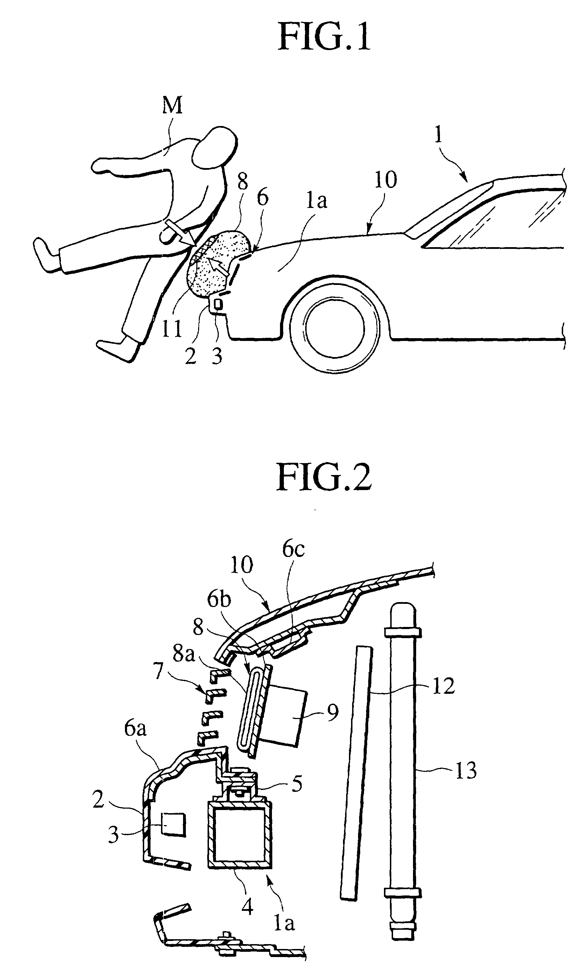

Fig. 1 to Fig. 5 show an airbag system according to the first embodiment of the present invention. A vehicle 1 has a vehicle front body 1a and the airbag system.

The airbag system has a pedestrian sensor 3 for detecting or pre-detecting a collision with a pedestrian M or the like,disposed within a bumper 2 provided at the front part of the front body 1a. A first cross member 4 is disposed along the width direction of the vehicle inside the bumper 2. A metal back-up member 6a (6) and an end part of the bumper 2 are mounted with bolts on the upper surface of the first cross member 4 with an intervening reinforcement member 5 having a hat-shaped cross-section. The back-up member 6a extends toward the front along the upper surface of the bumper 2 comprising outer-surface member.

A grille 7 is installed above the bumper 2 comprising outer-surface member. An airbag 8 and an inflator 9 are supported by back-up member 6b (6) behind the grille 7. The airbag 8 has a bag-shaped airbag body 8a stored in a folded-up condition. The airbag body 8a is given a bag shape and expanded by means of a signal from the pedestrian sensor 3, passes through an opening provided by pushing away the grille 7, and expands further so as to deploy in a manner that causes it to cover an area ranging from the upper surface of the bumper 2 to substantially the rear end part of a hood 10. Therefore, the airbag 8 has a small capacity, so that even when it is stored behind the grille 7 it does not affect the layout of other equipment. A high-rigidity part 11 having a rigidity that is greater than the other parts of the airbag body 8a is provided at part of or over the entire area of substantially the front part of the airbag 8. The high-rigidity part 11 is formed by increasing the thickness of part of the airbag body 8a. A condenser 12, a radiator 13 and the like are disposed behind the airbag 8 configured in the above-noted manner.

A hood 10 is disposed above the grille 7. An back-up member 6c (6) having a hat-shaped cross-section is mounted at the front edge of the lower surface of the hood 10. The three back-up members 6a, 6b, and 6c are each oriented so as to have a surface substantially perpendicular to a direction that is inclined upward toward the direction of travel of the vehicle. The back-up member 6 may alternatively being either one member or four or more members. While the repelling members 6 in this embodiment are formed by reinforcement members of the hood 10 and bumper 2, these can be formed by the hood 10 and bumper 2 themselves.

The operating action of this embodiment is as follows.

First, when the pedestrian sensor 3 installed within the bumper 2 detects or pre-detects a collision with a pedestrian M, an operating signal (collision signal) is output to the airbag 8, causing the airbag 8 to expand, pushing out the grille 7, thereby forming an opening therein, through which the airbag 8 passes to outside the vehicle. Once outside the vehicle, the airbag 8 expands further so as to cover an area ranging from the upper surface of the bumper 2 to substantially the front end part of the hood 10. Because the airbag 8 expands over only the above-noted limited area, it has a small capacity, thereby shortening the time required for expansion.

A femur and waist of a pedestrian collide to the vehicle after the first collision between the pedestrian leg and vehicle front body. As the direction of the second collision is upward and slant to the traveling direction of the vehicle, effective repulsion force is produced by the back-up member 6 extending at right angle to the second collision direction.

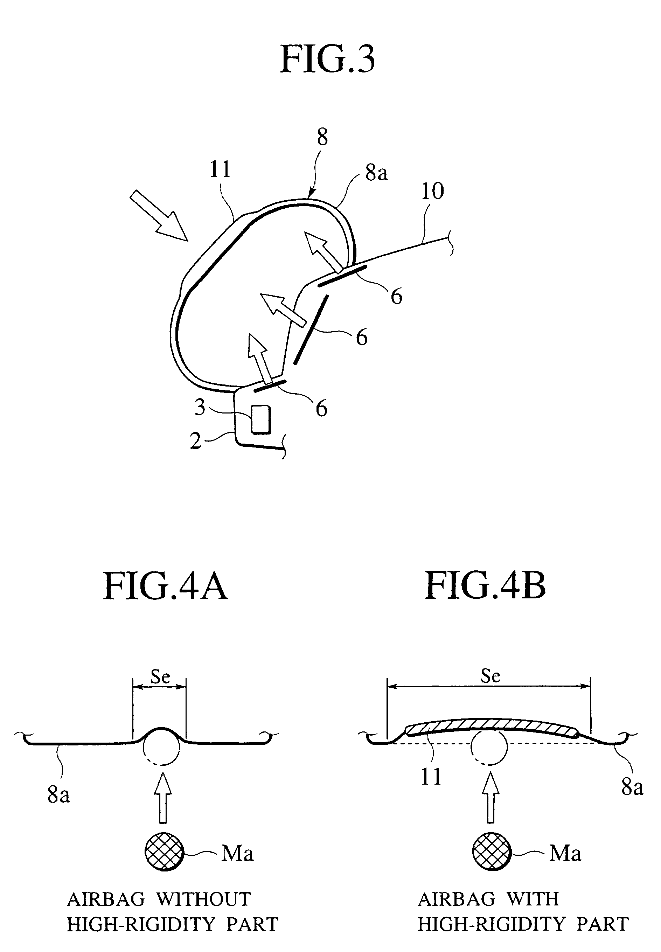

The repulsion force acts on to a deformed area of the airbag formed by collided leg or femur or waist of the pedestrian. The front part of the airbag 8 has a higher rigidity than other parts of the airbag 8 and forms high rigidity part 11. So, the impact from the pedestrian is loaded to the high rigidity part 11 and the high rigidity part 11 deforms much of the area of the airbag 8, makes a large effective area which distributes impact all of the airbag 8 shown in Figs. 4a and 4b. The large effective area can produce a rapid rise of the energy absorption curve during a first stage of the collision, and improves the energy absorption characteristics.

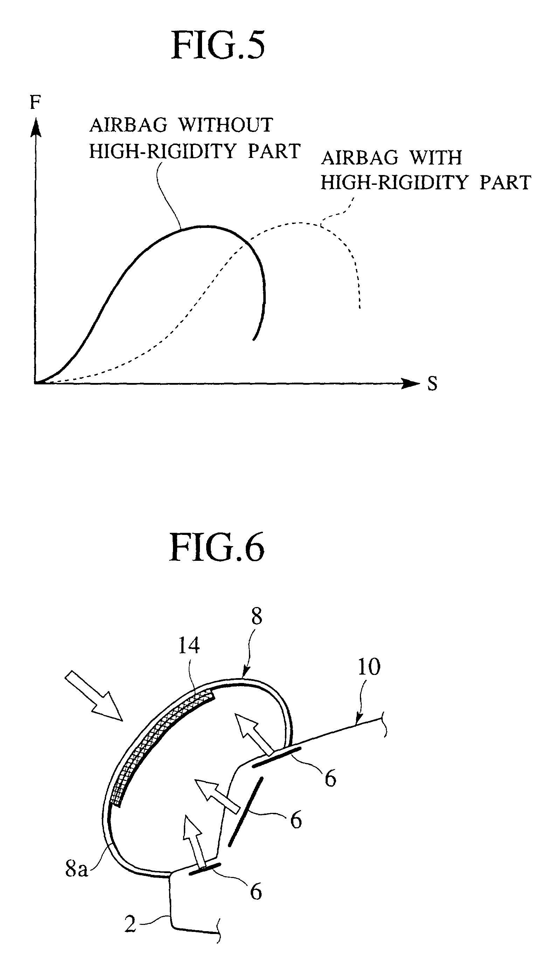

Fig. 6 is a drawing showing the second embodiment of the present invention. In this embodiment, a separate high-rigidity part 14 is provided in the airbag 8, the high-rigidity part 14 being formed by two layers of cloth that are superimposed on the inner surface of the airbag body 8a. Because there is no need to change the thickness and construction of the airbag body 8a itself, it is possible to use an already-manufactured airbag body 8b. The cloth layers can alternatively be either one layer or 3 or more layers, and these can alternatively be superimposed on the outer surface of the airbag body 8a.

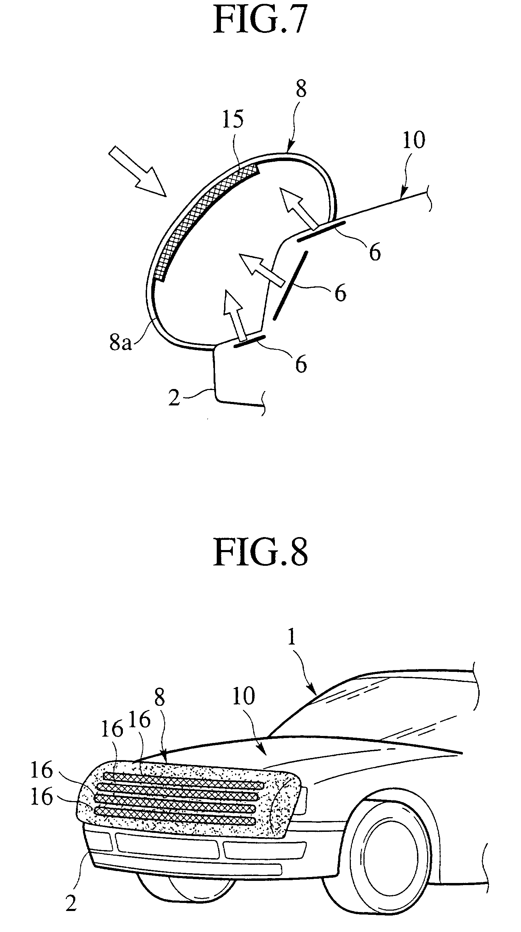

Fig. 7 is a drawing showing the third embodiment of the present invention. In this embodiment, the airbag 8 is provided with a separate high-rigidity part 15. The high-rigidity part 15 is formed by fixing a single layer of resin material to the inner surface of the airbag body 8a. The third embodiment does not need to change the thickness or construction of the airbag body 8a itself, it is possible to use an already-manufactured airbag body 8a. It is alternatively possible to use a metallic material in place of the resin material, or to attach the material on the outer surface of the airbag body 8a.

Fig. 8 is a drawing showing the fourth embodiment, relates to a high-rigidity part 16 fitted on the airbag 8. In this embodiment, the high-rigidity part 16 is separated with 4 parts easy to storage in the vehicle. Thus, four high-rigidity parts 16 with small vertical widths are disposed in a row with their lengths oriented in the lateral direction on either the inner surface or the outer surface of an airbag body 8a. The lateral direction length of the high-rigidity parts 16 is long and the high-rigidity parts are divided into four in the vertical direction, the folded-up storage of the airbag body 8a is facilitated.

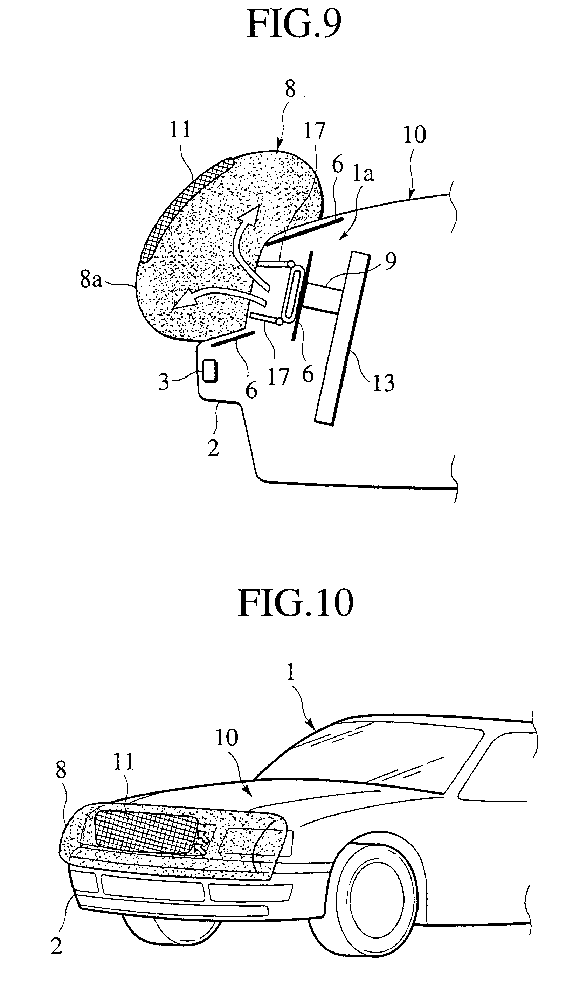

Fig. 9 and Fig. 10 are drawings showing the fifth embodiment of the present invention. In this embodiment, a reclosable lid 17 is formed in front of the airbag 8. The lid 17 controls the expansion of the airbag 8, and provides a guide so that the airbag 8 reliably expands to outside the vehicle from the opening in the grille 7. The airbag 8 and inflator 9 are disposed bottom in the opening not to protrude the edge of the lid outside to the vehicle. The edge of the lid 17 is disposed within the vehicle 1; the pedestrian M does not come into contact with the ends of the lid 17.

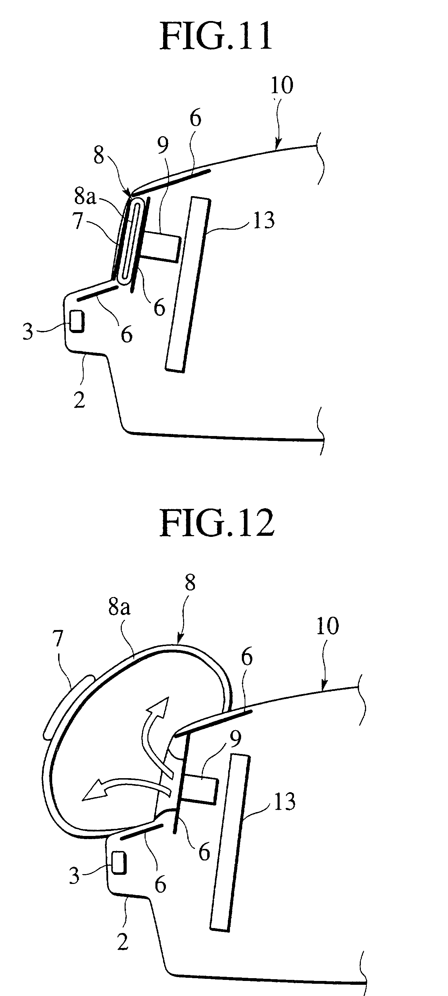

Fig. 11 and Fig. 12 are drawings showing the sixth embodiment of the present invention. In this embodiment, the grille 7 is fixed to a part of the substantially front part of the airbag 8, the grille 7 serving as a high-rigidity part. The airbag 8 is jerked by the grille, and expands forward from the opening in the grille 7 with reliability. There is no need for a lid to serve as a guide, as is done in the fifth embodiment, thereby reducing the number of parts.

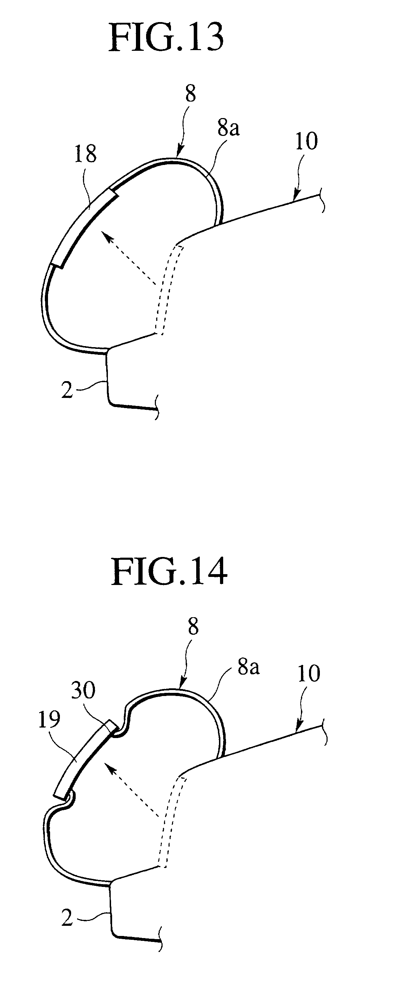

Fig. 13 is a drawing showing the seventh embodiment of the present invention. In this embodiment, a grille 18 is integrally formed with the airbag body 8a of the same material thereas, so as to serve as a high-rigidity part. The grille 18 is a dummy, does not pass air, air is introduced by an air intake not shown in the drawing. According to this embodiment, the airbag 8 and the grille 18 are formed together to achieve a further reduction in the number of components.

Fig. 14 is a drawing showing the eighth embodiment. In this embodiment, a notch 30 is formed in part of the airbag body 8a, and a separately provided grille 19 is mounted to the notch 30 as a high-rigidity part. The grille 19 is a dummy that does not pass air. As the grille 19 is provided in a separate element, the manufacture of the airbag 8 is simpler than in the seventh embodiment.

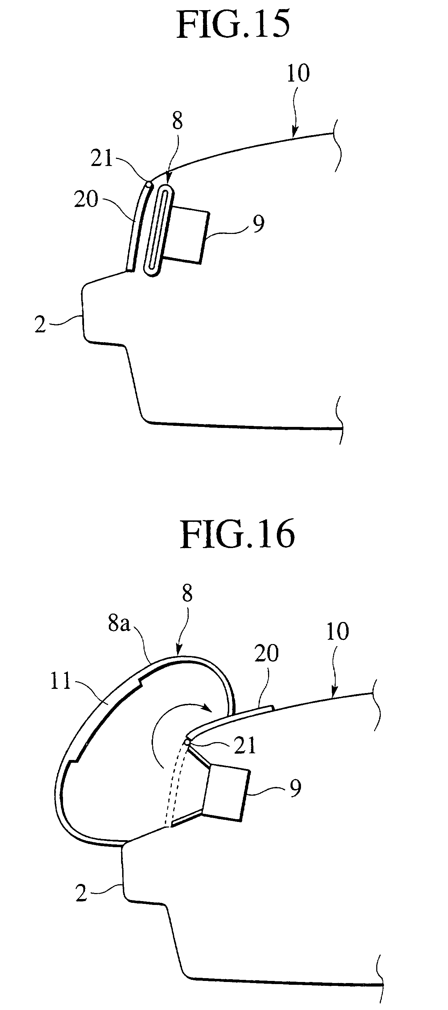

Fig. 15 and Fig. 16 are drawings showing the ninth embodiment of the present invention. In this embodiment, the upper end of a grille 20 is hinged to the vehicle body by a hinge 21 to swing the grille 20 to the upper side of the hood 10 during the expansion. The grille 20 is used as back-up member of the air bag. The grille 20 absorbs the impact of the hood from collided pedestrian.

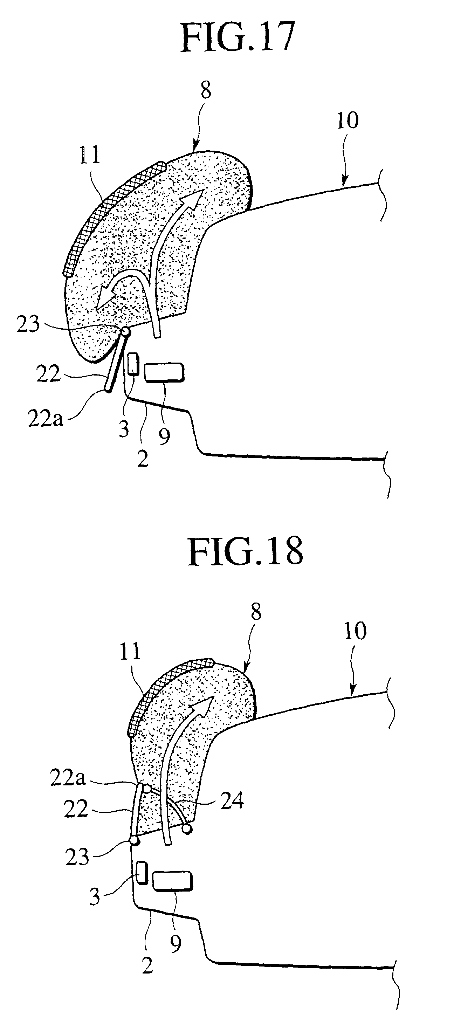

Fig. 17 is showing an airbag 8 and an inflator 9 that are housed in a bumper 2 through an opening at the front part of the vehicle. The opening is covered with a lid 22 provided on the upper surface of the bumper 2. During expansion, the airbag 8 passes through an opening to cover an area ranging from the upper surface of the bumper 2 to substantially the front end part of the hood 10, thereby achieving an effect similar to that of the first embodiment. As the lid 22 is hinged the front end of the bumper 2 by a hinge 23, the edge of the lid faces to the ground with the expansion. So, a pedestrian M or the like is prevented from contacting the edge 22a of the lid 22.

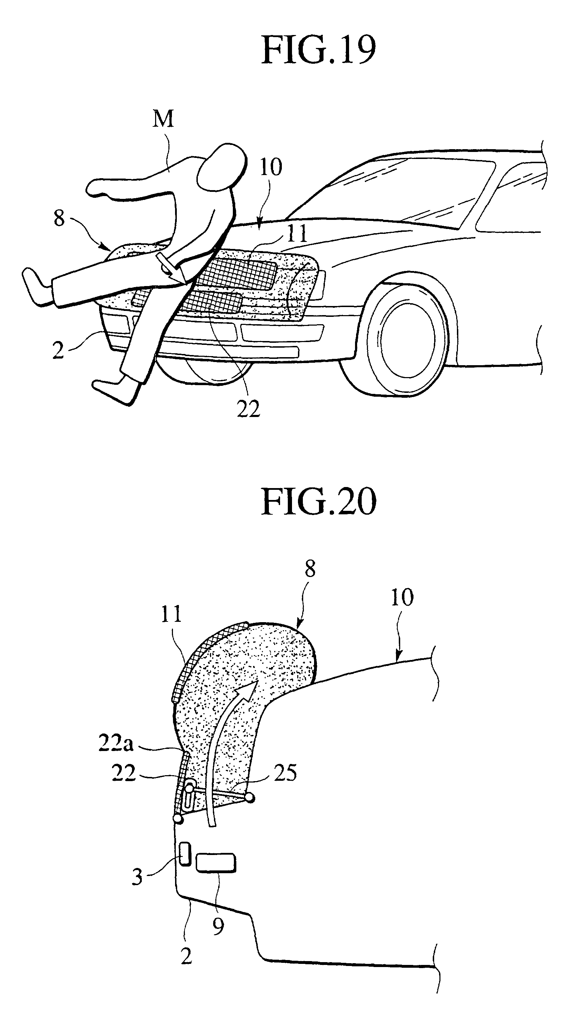

Fig. 18 and Fig. 19 are showing, a wire 24 that is provided as a stopper between the end 22a of the lid 22 and the rear end of the bumper 2. During expansion, the wire 24 maintains the lid 22 to a position that is inclined slightly to the rear side of the vehicle. The lid 22 is inclined slightly to the rear, a pedestrian M or the like does not direct contact with the end 22a of the lid 22. Additionally, the lid 22 serves as a high-rigidity part, the large effective surface area of a collision with a pedestrian M or the like is got by this, and attains more effective impact absorption.

Fig. 20 is showing, a link 25 is used as a stopper instead of the wire used before.

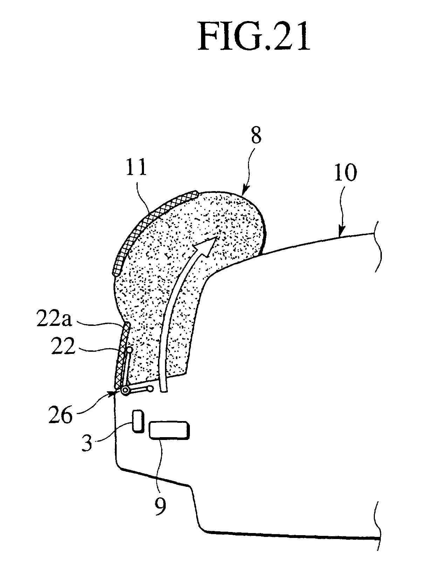

Fig. 21 shows, a spring 26 that is used as a stopper instead of the wire used before. Commonly, the lid 22 is pulled by the spring 26 in the downward direction to cover the upper surface of the bumper 2 and opened by the airbag with opposition force of the spring 26 only when the airbag 8 expands.

## Claims

1. An airbag system mounted on a vehicle front body (la), comprising:
a bumper (2) attached to a front end of the front body (1a);
a hood (10) mounted on the front body (1a), to the rear of the bumper (2) ;
an airbag (8) disposed in a region between a front end of the bumper (2) and a rear end of the hood (10);
a sensor (3) for detecting or pre-detecting a vehicle front collision with a pedestrian and generating a collision signal; and
an inflator (9) which receives the collision signal and generates and supplies gas for expanding the airbag (8);
the airbag (8) having a high-rigidity part (7;11;14;15;16;18;19) disposed on at least a front side thereof; and
the airbag (8) expanding forward and upward to cover an upper surface of the bumper (2) and a front end of the hood (10), the expansion direction of the airbag (8) substantially opposing the exertion direction of an impact force from the pedestrian; and
the front body (1a) being provided with a back-up member or members (6,6a, 6b, 6c) that are extending at a right angle to a pedestrian collision direction that is upward and slant to the traveling direction of the vehicle.

2. An airbag system according to claim 1, including at least one operable lid (17) connected to the front body, for controlling a direction of the airbag expansion.

3. An airbag system according to claim 1 or 2, including an outer-surface member (17;18;19;20), the airbag (8) being disposed behind the outer-surface member.

4. An airbag system according to claim 3, wherein the high-rigidity part comprises the outer-surface member (7;18;19).

5. An airbag system according to claim 3 or 4, wherein the outer-surface member comprises a front grille (7;18;19;20), and the airbag (8) is disposed between the front grille and a radiator (13).

6. An airbag system according to claim 4, wherein the airbag (8) comprises an airbag body (8a) substantially having a bag shape, and the outer-surface member (7) is fixed to an outer surface of the airbag body (8a).

7. An airbag system according to claim 4, wherein the airbag (8) comprises an airbag body (8a) substantially having a bag shape with a notch (30), and the outer-surface member (19) is fixed to the airbag body (8a) and closes the notch (30).

8. An airbag system according to claim 3, wherein the outer-surface member (20) is hinged to rotate toward an upper surface of the hood (10).

## Patentansprüche

1. Airbag-System, das auf einem vorderen Fahrzeugkörper (1a) angebracht ist, umfassend:
eine Stoßstange (2), die an einem vorderen Ende des vorderen Körpers (1a) angebracht ist;
eine Haube (10), die auf dem vorderen Körper (1a), hinter der Stoßstange (2), angebracht ist;
einen Airbag (8), der in einem Bereich zwischen einem vorderen Ende der Stoßstange (2) und einem hinteren Ende der Haube (10) angeordnet ist;
einen Sensor (3), um eine vordere Fahrzeugkollision mit einem Fußgänger zu erfassen oder vorher zu erfassen, und ein Kollisionssignal zu erzeugen; und
eine Aufblaseinheit (9), die das Kollisionssignal empfängt und Gas zum Ausdehnen des Airbags (8) erzeugt und zuführt;
wobei der Airbag (8) ein Teil mit hoher Festigkeit (7; 11; 14; 15; 16; 18; 19) aufweist, das wenigstens auf einer vorderen Seite davon angeordnet ist; und
wobei sich der Airbag nach vorne und nach oben ausdehnt, um eine obere Oberfläche der Stoßstange (2) und ein vorderes Ende der Haube (10) abzudecken, wobei die Ausdehnungsrichtung des Airbags (8) im wesentlichen der Anlegungsrichtung einer Aufschlagkraft von dem Fußgänger entgegengesetzt ist; und
wobei der vordere Körper (1a) mit einem Stützelement oder -Elementen (6, 6a, 6b, 6c) versehen ist, die sich unter einem rechten Winkel zu einer Fußgängerkollisionsrichtung erstrecken, die nach oben und schrägt zu der Fahrtrichtung des Fahrzeugs ist.

2. Airbag-System nach Anspruch 1, mit wenigstens einem betreibbaren Deckel (17), mit dem vorderen Körper verbunden ist, zum Steuern einer Richtung der Airbag-Ausdehnung.

3. Airbag-System nach Anspruch 1 oder 2, mit einem Außenoberflächenelement (17; 18; 19; 20), wobei der Airbag (8) hinter dem Außenoberflächenelement angeordnet ist.

4. Airbag-System nach Anspruch 3, wobei das Teil mit der hohen Festigkeit das Außenoberflächenelement (7; 18; 19) umfasst.

5. Airbag-System nach Anspruch 3 oder 4, wobei das Außenoberflächenelement ein vorderes Gitter (7; 18; 19; 20) umfasst und der Airbag (8) zwischen dem vorderen Gitter und einem Kühler (13) angeordnet ist.

6. Airbag-System nach Anspruch 4, wobei der Airbag (8) einen Airbag-Körper (8a) umfasst, der im wesentlichen eine Ballon-Form aufweist, und das Außenoberflächenelement (7) an einer äußeren Oberfläche des Airbag-Körpers (8a) befestigt ist.

7. Airbag-System nach Anspruch 4, wobei der Airbag (8) einen Airbag-Körper (8a) umfasst, der im wesentlichen eine Ballon-Form mit einer Kerbe (30) umfasst, und das Außenoberflächenelement (19) an dem Airbag-Körper (8a) befestigt ist und die Kerbe (30) verschließt.

8. Airbag-System nach Anspruch 3, wobei das Außenoberflächenelement (20) gelenkig angebracht ist, um sich in Richtung auf eine Oberfläche der Haube (10) hin zu drehen.

## Revendications

1. Système de coussin d'air monté sur la partie avant de la carrosserie d'un véhicule (1a), comprenant:
un pare-chocs (2) fixé sur une extrémité avant de la partie avant de la carrosserie (1a);
un capot (10) monté sur la carrosserie avant (1a), sur l'arrière du pare-chocs (2);
un coussin d'air (8) agencé dans une région entre une extrémité avant du pare-chocs (2) et une extrémité arrière du capot (10);
un capteur (3) destiné à détecter ou à détecter d'avance une collision frontale entre un véhicule et un piéton et à produire un signal de collision; et
un dispositif de gonflement (9) recevant le signal de collision pour produire et fournir du gaz en vue du déploiement du coussin d'air (8);
le coussin d'air (8) comportant une partie à haute rigidité (7; 11; 14; 15; 16; 18; 19) agencée sur au moins un côté avant correspondant; et
le coussin d'air (8) se déployant vers l'avant et vers le haut pour couvrir une surface supérieure du pare-chocs (2) et une extrémité avant du capot (10), la direction de déploiement du coussin d'air (8) étant pratiquement opposée à la direction d'une force d'impact avec le piéton; et
la partie avant de la carrosserie (1a) comportant un élément ou des éléments de support (6, 6a, 6b, 6c) s'étendant à angle droit par rapport à une direction de collision avec un piéton, ascendante et inclinée par rapport à la direction de déplacement du véhicule.

2. Système de coussin d'air selon la revendication 1, englobant au moins un couvercle opérationnel (17) connecté à la partie avant de la carrosserie pour contrôler la direction du déploiement du coussin d'air.

3. Système de coussin d'air selon les revendications 1 ou 2, englobant un élément de surface externe (17; 18; 18; 20), le coussin d'air (8) étant agencé derrière l'élément de surface externe.

4. Système de coussin d'air selon la revendication 3, dans lequel la partie à haute rigidité est constituée par l'élément de surface externe (7; 18; 19).

5. Système de coussin d'air selon les revendications 3 ou 4, dans lequel l'élément de surface externe comprend une grille avant (7; 18; 19; 20), le coussin d'air (8) étant agencé entre la grille avant et un radiateur (13).

6. Système de coussin d'air selon la revendication 4, dans lequel le coussin d'air (8) comprend un corps de coussin d'air (8a) ayant pratiquement une forme de poche, l'élément de surface externe (7) étant fixé sur une surface externe du corps du coussin d'air (8a).

7. Système de coussin d'air selon la revendication 4, dans lequel le coussin d'air (8) comprend un corps de coussin d'air (8a) ayant pratiquement une forme de poche, avec une encoche (30), l'élément de surface externe (19) étant fixé sur le corps du coussin d'air (8a) et fermant l'encoche (30).

8. Système de coussin d'air selon la revendication 3, dans lequel l'élément de surface externe (20) est fixé par charnière pour tourner vers une surface supérieure du capot (10).
